# EUROPÄISCHE PATENTANMELDUNG

(11) **EP 1 457 528 A1**
(43) Veröffentlichungstag der Anmeldung: **15.09.2004**
(21) Anmeldenummer: 03005612.1
(22) Anmeldetag: 12.03.2003
(51) Int. Cl.: C09B 67/22, D06P 3/42, D06P 1/18, D06P 3/54

(54) **Farbstoffmischungen zum Färben von Fasermaterialien enthaltend Polyesterfasern**

(71) Anmelder: CLARIANT INTERNATIONAL LTD., 4132 Muttenz (CH)
(72) Erfinder: Die Erfindernennung liegt noch nicht vor

(57) **Zusammenfassung**

Farbstoffmischung enthaltend mindestens einem Farbstoff der Formeln (1) 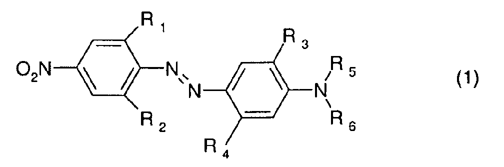 und mindestens einem Farbstoff der Formeln (2) 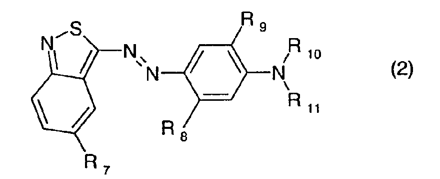 wobei die Substituenten die in den Ansprüchen aufgeführten Bedeutungen haben. Diese Mischungen eignen sich zum Färben oder Bedrucken von Polyester und/oder Celluloseacetat enthaltenden Fasermaterialien.

## Beschreibung

Die vorliegende Erfindung betrifft Mischungen von Farbstoffen, ihre Herstellung und ihre Verwendung zum Färben oder Bedrucken von Fasermaterialien, die Polyester enthaltenden.

Farbstoffe und Farbstoffmischungen zum Färben von Polyester sind bekannt. Auch Farbstoffe und Farbstoffmischungen zum Färben von halbsynthetischen oder synthetischen hydrophoben Celluloseacetat enthaltenden Fasermaterialien wie z. B. Cellulose 2¹/₂ -Acetat und Cellulosetriacetat, sind bekannt. Es hat sich jedoch gezeigt, dass diese Farbstoffe oder deren Gemische den höchsten Ansprüchen, insbesondere im Bezug auf die Reproduzierbarkeit, Empfindlichkeit gegen die Färbebadtemperatur, oder die Eignung für spezifische Färbeverfahren, insbesondere bei der Verwendung einer Jigger- oder Jetfärbeapparatur, nicht immer vollauf genügen.

Auch ziehen Fabstoffe die Polyester gut färben, oft nicht gut auf Cellulose 2¹/₂ - Acetat- oder Cellulosetriacetatfasern auf. Andererseits ziehen Fabstoffe die Cellulose 2¹/₂-Acetat- oder Cellulosetriacetatfasem gut färben, oft nicht gut auf Polyester auf.

Zusätzlich zeigen gewisse für Acetatfasern geeignete Farbstoffe eine grosse Temperaturempfindlichkeit, sodass bei nicht gleichmässiger Temperaturverteilung in der Färbeflotte ebenfalls ein schlechtes Warenbild bzw. Farbtiefe entsteht.

C.I. Disperse Blau 183 und seine Derivate lassen sich nicht auf Celluloseacetat färben und geben beim Färben nach dem Ausziehverfahren auf Polyester kaum gleichmässige Färbungen.

Es besteht daher Bedarf nach neuen Farbstoffen oder Farbstoffmischungen, welche diese Nachteile nicht zeigen und trotzdem zu Färbungen mit einem Bunttonwinkel (der Buntton beschreibt die Art der Buntheit (DIN 5033-1: 1979-03) ) von 295 bis 305° (vorzugsweise 298 bis 302°) bei einem Richtyptiefe 1/1 auf Polyester (nach DIN 5033/Teil 3) und der gleichen bzw. annähernd gleichen Buntheit wie C.I. Disperse Blau 183 bei gleichen oder besseren Echtheiten führen.

Es wurde nun überraschenderweise gefunden, dass die erfindungsgemässen Mischungen die oben angegebenen Kriterien weitgehend erfüllen, während die Eigenschaften der einzelnen Farbstoffe diese Kriterien nicht oder nur ungenügend erfüllen.

Gegenstand der vorliegenden Erfindung ist somit eine Farbstoffmischung enthaltend mindestens einen Farbstoffe der Formeln (1) 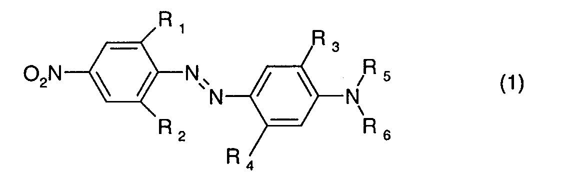 und mindestens einen Fabstoff der Formel (2) 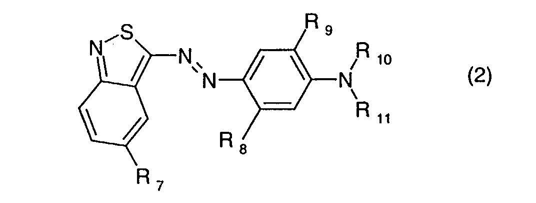 wobei
R₁ Wasserstoff, Halogen, Nitro oder Cyano
R₂ Wasserstoff, Halogen, Nitro oder Cyano
R₃ Wasserstoff, Halogen, C₁-C₄-Alkoxy oder C₁-C₄-Alkyl
R₄ Wasserstoff, C₁-C₄-Alkyl
R₅ Wasserstoff, unsubstituiertes oder durch Hydroxy, Cyano, C₁-C₄-Alkylcarbonyloxy, substituiertes C₁-C₄-Alkyl oder C₁-C₄-Alkenyl
R₆ unsubstituiertes oder durch Hydroxy, Cyano, C₁-C₄-Alkylcarbonyloxy, C₁-C₄-Alkoxycarbonyl substituiertes C₁-C₄-Alkyl oder C₁-C₄-Alkenyl,
R₇ Nitro, C₁-C₄-Alkoxy oder der Rest -SO₂CH₃
R₈ Wasserstoff oder C₁-C₄-Alkyl,
R₉ Wasserstoff oder C₁-C₄-Alkyl,
R₁₀ unsubstituiertes oder durch Hydroxy oder Cyano substituiertes C₁-C₄-Alkyl,
R₁₁ unsubstituiertes oder durch den Rest -O-COR₁₂ substituiertes C₁-C₄-Alkyl, worin R₁₂ C₁-C₄-Alkyl,
bedeuten.

Gegenstand der vorliegenden Erfindung ist somit eine Farbstoffmischung die zu Färbungen mit einem Bunttonwinkel (der Buntton beschreibt die Art der Buntheit (DIN 5033-1: 1979-03) ) von 295 bis 305° (vorzugsweise 298 bis 302°) bei einem Richtyptiefe 1/1 auf Polyester (nach DIN 5033/Teil 3) und der gleichen bzw. annähernd gleichen Buntheit wie C.I. Disperse Blau 183 bei gleichen oder besseren Echtheiten führt dadurch gekennzeichnet, dass sie mindestens einen Farbstoffe der Formeln (1) 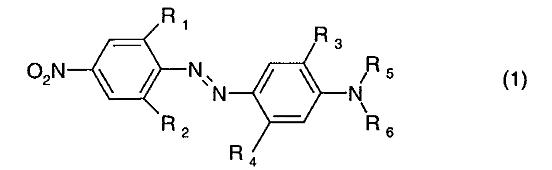 und mindestens einen Fabstoff der Formel (2) 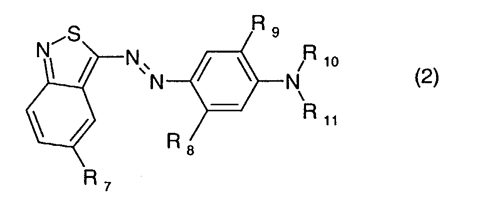 enthalten, wobei die Substituenten die oben angegebene Bedeutung haben.

Bevorzugte Farbstoffmischung enthaltend mindestens einen Farbstoffe der Formeln (1) und mindestens einen Farbstoffe der Formeln (2) wobei R₄ C₁-C₄-Alkyl und R₇ Nitro bedeuteten.

Die bevorzugten Farbstoffmischungen bestehen aus bis zu 60% eines Fabstoffes gemäss der Formel (1) bezogen auf die Summe der Farbstoffe (1) und (2). Besonders bevorzugten Farbstoffmischungen bestehen aus bis zu 50% eines Fabstoffes gemäss der Formel (1) bezogen auf die Summe der Farbstoffe (1) und (2). In ganz gesonders bevorzugten Farbstoffmischungen ist das Verhältnis zwischen (1) und (2) 0.9 bis 1,1 zu 1.8 zu 2.2, also rund 1:2. der Anteil an (2) kann bis zu 99% bezogen auf die Summe der Farbstoffe (1) und (2) betragen, in bevorzugten Fällen bis zu 95% bezogen auf die Summe der Farbstoffe (1) und (2).

Besonders bevorzugt sind Mischungen enthaltend mindestens einen Farbstoff der Formeln (1') 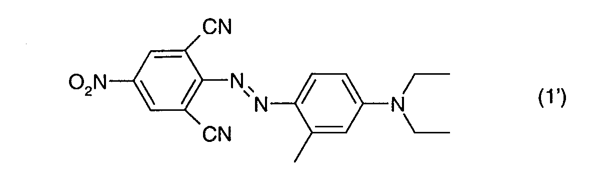 und mindestens einen Farbstoff der Formel (2')

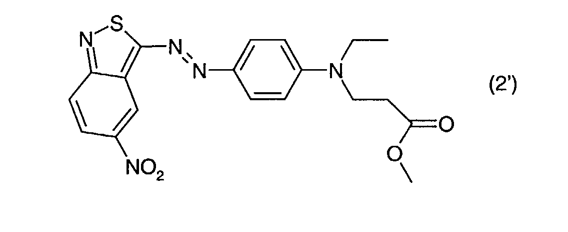

Weiter besonders bevorzugt sind Mischungen, die zu Färbungen mit einem Bunttonwinkel (DIN 5033-1: 1979-03) von 295 bis 305° (vorzugsweise 298 bis 302°) bei einem Richtyptiefe 1/1 auf Polyester (nach DIN 5033/Teil 3) und der gleichen bzw. annähernd gleichen Buntheit wie C.I. Disperse Blau 183 bei gleichen oder besseren Echtheiten führen dadurch gekennzeichnet, dass sie mindestens einen Farbstoffe der Formeln (1') und mindestens einen Farbstoff der Formel (2') enthalten.

Die erfindungsgemässen Farbstoffmischungen können weitere Dispersionsfarbstoffe, die zum Nuancieren der Farbstoffmischung dienen, in einer Menge von bis zu 5 Gew.-% enthalten. Diese "Nuancierfarbstoffe" können durch übliches Vermischen hinzugefügt werden.

Die erfindungsgemässen Farbstoffmischungen können weitere Dispersionsfarbstoffe, auch in einer Menge von mehr als 5 Gew.-% enthalten. Auch diese Farbstoffmischungen können durch übliches Vermischen hergestellt werden, sodass auch tiefblaue, braune und schwarze Färbungen auf z.B. unter anderem Polyester- und/oder Celluloseacetat- und/oder Polyurethanfasermaterialien hergestellt werden können.

Tiefblaue, braune und schwarze Färbungen die z.B. unter anderem auf Polyester- und/oder auf Celluloseacetatmaterialien und Fasermaterialien die aus Mischungen von Polyester- und/oder auf Celluloseacetatfasermaterialien bestehen können anfärben, können ohne weiteres mit den oben genannten Farbstoffmischungen enthaltend mindestens zwei Farbstoffe der Formeln (1) und (2) bzw. der Formeln (1') und (2') zusammen mit Dispersionsfarbstoffenmischungen, die aus gelben, roten und/oder orangen Dispersionsfarbstoffen bestehen, erhalten werden.

Als orange, gelbe oder rote Komponente kann jeder orange, gelbe oder rote Dispersionsfarbstoff verwendet werden, so er mit der obigen Mischung kompatibel ist.

Ein weiterer Gegenstand der Erfindung ist eine Mischung die wenigstens einen Fabstoff der Formel (1), wenigstens einen Farbstoff (2) und wenigstens einen der folgenden Fabstoffe enthält: 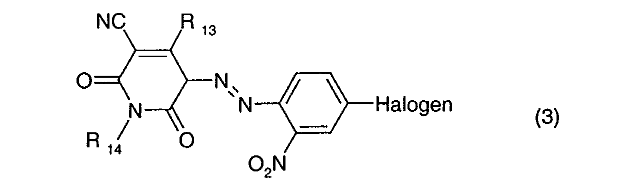 worin
R₁₃ C₁-C₄-Alkyl, R₁₄ C₁-C₄-Alkyl und Halogen die Halogenatome bedeuten, 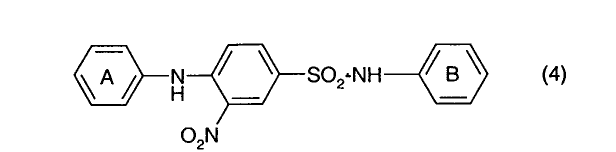 wobei die Ringe A und B weitersubstituiert werden können, 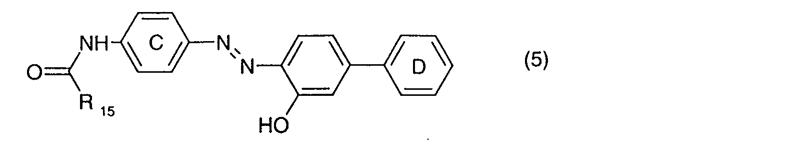 worin
R₁₅ C₁-C₄-Alkyl ist und die Ringe C und D weitersubstituierte werden können, 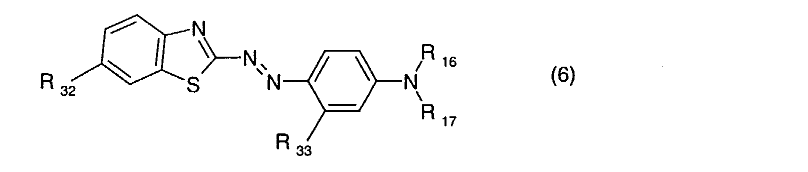 worin
R₁₆ unsubstituiertes oder durch Hydroxy oder Cyano substituiertes C₁-C₄-Alkyl, R₁₇ unsubstituiertes oder durch den Rest -O-COR₁₈ substituiertes C₁-C₄-Alkyl, worin R₁₈ C₁-C₄-Alkyl, R₃₂ Nitro, C₁-C₄-Alkoxy oder der Rest -SO₂CH₃ und R₃₃ Wasserstoff oder C₁-C₄-Alkyl sind, 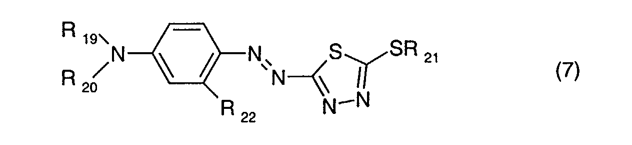 worin
R₁₉ C₁-C₄-Alkyl, R₂₀ C₁-C₄-Alkyl, R₁₅ C₁-C₄-Alkyl und R₂₂ C₁-C₄-Alkyl oder der Rest - NHCOR₂₃ sind, worin R₂₃ C₁-C₄-Alkyl ist, 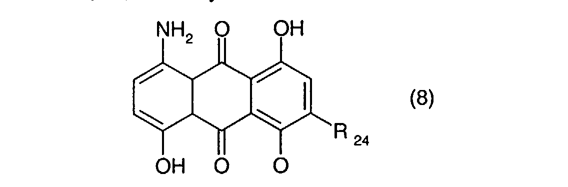 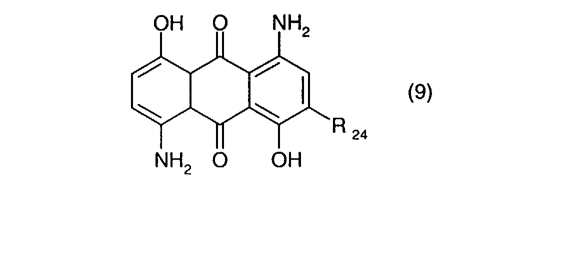 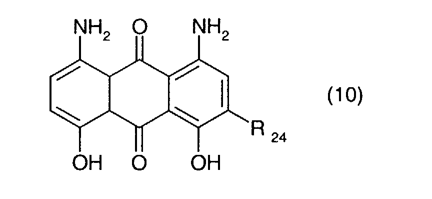 worin R₂₄ Halogen ist, 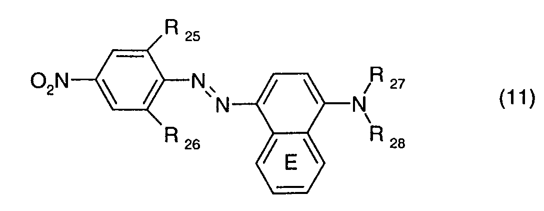 worin
R₂₅ Cyano, Nitro oder Halogen, R₂₆ Halogen, R₂₇ unsubstituiertes oder durch Hydroxy substituiertes C₁-C₄-Alkyl und R₂₈ unsubstituiertes oder durch Hydroxy substituiertes C₁-C₄-Alkyl sind und der Naphthylring E weitersubstituiert werden kann, und/oder 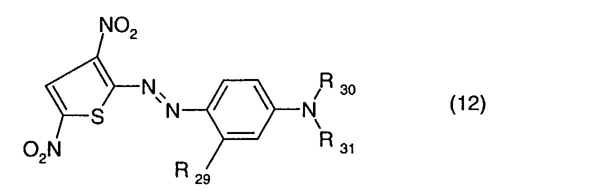 worin
R₂₆ C₁-C₄-Alkyl oder der Rest NHCOR₁₇ sind, worin R₁₇ C₁-C₄-Alkyl ist, R₂₇ C₁-C₄-Alkyl oder C₁-C₄-Alkylcarbonyloxy-C₁-C₄-Alkyl und R₂₈ C₁-C₄-Alkyl oder C₁-C₄-Alkylcarbonyloxy-C₁-C₄- Alkyl sind.

C₁-C₄-Alkyl als solches und als Rest in C₁-C₄-Alkylcarbonylamino oder C₁-C₄-Alkylcarbonyloxy, ist Methyl, Ethyl, Propyl, Isopropyl, n = Butyl, Isobutyl, sec-Butyl oder tert-Butyl.

C₁-C₄-Alkoxy als solches oder als Rest in C₁-C₄-Alkoxycarbonyl ist z. B. Methoxy, Ethoxy, Propoxy oder Butoxy.

R₁, R₃, R₂₅ und R₂₆ als Halogen sind z. B. Brom oder vorzugsweise Chlor.
R₂ und R₂₄ als Halogen sind z. B. Chlor oder vorzugsweise Brom.
Halogen in der Formel (3) ist z. B. Brom oder vorzugsweise Chlor.
R₅, R₆ und R₁₆ als C₁-C₄-Alkyl sind Propyl oder Isopropyl und insbesondere Ethyl.
R₁₃, R₁₅, R₁₈, R₂₂, R₂₃, R₈, R₃₁ und R₃₃ als C₁-C₄-Alkyl sind vorzugsweise Ethyl und insbesondere Methyl.
R₁₄, R₁₉, R₂₁, R₁₁, R₃₀ und R₂₅ als C₁-C₄-Alkyl sind vorzugsweise Methyl und insbesondere Ethyl.
R₁₉, R₂₀, R₂₇, und R₂₈ als C₁-C₄-Alkyl sind vorzugsweise Ethyl und insbesondere Propyl.
R₃₀ und R₃₁ sind vorzugsweise C₁-C₄-Alkyl.
R₂₆ Ist vorzugsweise Nitro oder der Rest -SO₂CH₃.

Die C₁-C₄-Alkylreste sind mit den vorderhand genannten Substituenten in der Regel 1-oder 2-fach substituiert.

Die Ringe A bis E können unabhängig voneinander z. B. durch C₁-C₄-Alkyl, C₁-C₄-Alkoxy, Halogen, Nitro, Cyano oder Acylamino substituiert werden.

Ein weiterer Gegenstand der Erfindung ist eine Mischung die wenigstens einen Fabstoff der Formel (1'), wenigstens einen Farbstoff (2') und wenigstens einen der Fabstoffe mit den Formeln (3) und/oder (4) und/oder (5) und/oder (6) und/oder (7) und/oder (8) und/oder (9) und/oder (10) und/oder (11) und/oder (12) enthält.

Bevorzugte Mischungen sind Mischung die wenigstens einen Fabstoff der Formel (1), wenigstens einen Farbstoff (2) und wenigstens einen der folgenden Fabstoffe enthält: 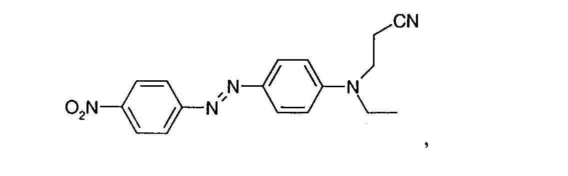 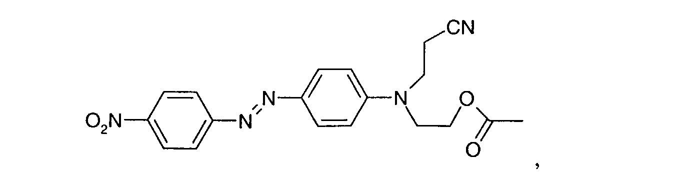 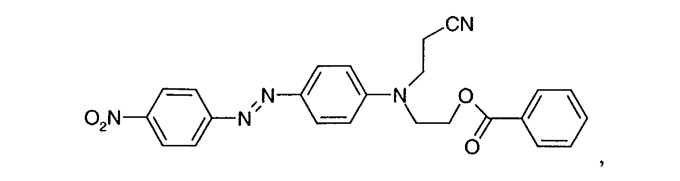 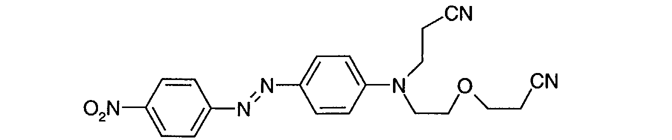 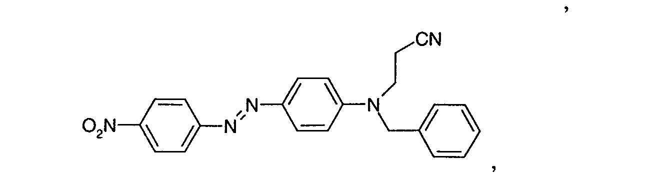 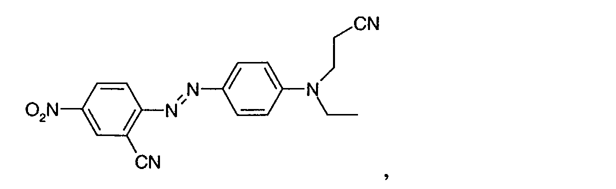 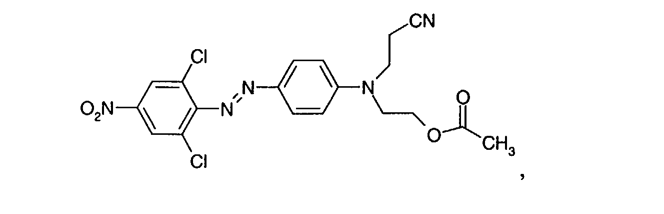 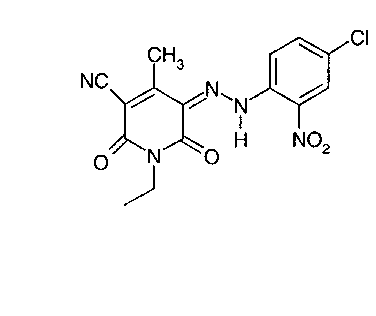 oder 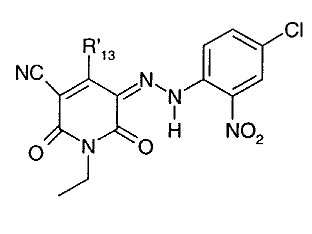 wobei R'₁₃ C₂ bis C₄ Alkyl bedeutet.

Die Herstellung der oben erwähnten Farbstoffe ist bekannt.

Die erfindungsgemässen Farbstoffmischungen können als Farbstoffe zum Färben und Bedrucken von Polyesterfasern enthaltenden Fasermaterialien, vor allem Textilmaterialien, verwendet werden. Dies Fasermaterialien können zusätzlich halbsynthetischen hydrophoben und/oder Celluloseacetatfasern enthalten wie z. B. Viskose oder Polyamid. Textilmaterialien aus Mischgeweben, die halbsynthetischen hydrophoben, Celluloseacetat enthaltenden Textilmaterialien und z. B. Viskose oder Polyamid enthalten, können ebenfalls mit Hilfe der erfindungsgemässen Farbstoffmischungen gefärbt oder bedruckt werden.

Als halbsynthetische hydrophobe, Polyester enthaltende Textilmaterialien kommen vor allem Cellulose 2¹/₂-Acetat und Cellulosetriacetat und Celluloseacetat in Frage.

Die Applikation der erfindungsgemässen Verbindungen auf die Textilmaterialien erfolgt nach bekannten Färbeverfahren. Beispielsweise färbt man Cellulose-2¹/₂ -acetat vorzugsweise zwischen ungefähr 65 bis 95°C und Cellulosetriacetat bei Temperaturen zwischen 65 und 130°C, insbesondere zwischen 90 und 125°C. Reine Polyesterfasermaterialien können bei Temperaturen bis zu 130° gefärbt werden.

Die erfindungsgemässen Farbstoffmischungen färben im Färbebad gleichzeitig anwesende Wolle und Baumwolle nicht oder nur wenig an (sehr gute Reserve), so dass sie auch gut zum Färben von Celluloseacetat/Wolle- und Celluloseacetat/Cellulose-Mischgeweben oder Polyester alleine verwendet werden können.

Die erfindungsgemässen Farbstoffmischungen eignen sich zum Färben nach dem Thermosol-Verfahren, im Ausziehverfahren, Pad-Steam-, Pad-Roll- und Pad-Jigverfahren und für Druckverfahren. Unter den Druckverfahren versteht man neben den klassischen Verfahren wie dem Rouleauxdruck und/oder dem Film- oder Schablonen- und Transferdruck auch das Farbstrahldruckverfahren wie das Ink Jet-, Bubble-Jet-, Compound-Jet-, Trocken-Ink-Jet oder Hotmelt-Ink-Jet-Verfahren.

Das genannte Textilmaterial kann dabei in den verschiedenen Verarbeitungsformen vorliegen, wie z. B. als Faser, Faden oder Vlies, als Gewebe oder Gewirke.

Es ist vorteilhaft, die erfindungsgemässen Farbstoffmischungen vor ihrer Verwendung in eine Farbstoffformulierung zu überführen. Hierzu wird die Farbstoffmischung vermahlen, so dass ihre Teilchengrösse im Mittel zwischen 0,1 und 10 Mikron beträgt. Das Vermahlen kann zweckmässigerweise in Gegenwart von Dispergiermitteln erfolgen. Beispielsweise wird die getrocknete Farbstoffmischung mit einem oder mehreren Dispergiermitteln gemahlen oder in Pastenform mit einem oder mehreren Dispergiermitteln geknetet und hierauf im Vakuum oder durch Zerstäuben getrocknet. Mit den so erhaltenen Formulierungen kann man nach Zugabe von Wasser Druckpasten und Färbebäder herstellen. Als Dispergiermittel kommen die beim Färben mit Dispersionsfarbstoffen allgemein gebräuchlichen Dispergatoren in Frage. Es sind z. B. solche, die in der EP-A-0 280 654 (Seite 5, Zeilen 40 bis 56) als Dispergiermittel genannt sind. Dies kann beispielsweise das Natriumsalz eines Ligninsulfonats oder das Natriumsalz eines weiteren Ligninsulfonates, das aus der Reaktion von Lignin mit Dinatriumsulfit und Formaldehyd stammt, sein.

Die Farbstoffe können aber auch einzeln wie oben beschrieben formuliert und dann in einem einfachen Mischvorgang in die entsprechenden Farbstoffformulierungen übergeführt werden.

Die Menge des oder der Dispergiermitteln in der Farbstoffformulierung kann zwischen 0 und 75 Gew.-%, bezogen auf das Gewicht der Farbstoffformulierung, betragen.

Die Menge der Farbstoffmischungen in der Färbeflotte richtet sich nach der gewünschten Farbnuance; im allgemeinen haben sich Mengen von 0,01 bis 15, insbesondere 0,02 bis 10, vor allem 0,1 bis 5 Gewichtsprozent, bezogen auf das Gewicht des zu färbenden Fasermateriales, bewährt.

Die Färbeflotten können auch weitere Zusätze, wie z. B. Färbereihilfsmittel, Netzmittel und Entschäumer enthalten.

Die Färbeflotten können desweiteren Mineralsäuren, wie z. B. Schwefelsäure oder Phosphorsäure, oder insbesondere organische Säuren, wie z. B. Ameisensäure oder Essigsäure und/oder Salze, wie Ammoniumacetat oder Natriumsulfat enthalten. Die Säuren dienen vor allem der Einstellung des pH-Wertes der Färbeflotten, der vorzugsweise zwischen 4 und 7 liegt.

Beim Bedrucken wird man die üblichen Verdickungsmittel verwenden, z. B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffmischungen verleihen den genannten Materialien, vor allem dem Cellulose 2¹/₂ -Acetat und Cellulosetriacetat, egale Farbtöne von sehr guten Gebrauchsechtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die gute Farbausbeute und der gute Aufbau der erfindungsgemässen Farbstoffmischungen.

Die erfindungsgemässen Farbstoffmischungen können auch gut verwendet werden zur Herstellung von Mischnuancen zusammen mit anderen Farbstoffen.

Ausserdem eignen sich die erfindungsgemässen Farbstoffmischungen auch gut zum Färben von hydrophobem Textilmaterial aus überkritischem CO₂.

Die vorstehend genannte Verwendung der erfindungsgemässen Farbstoffmischungen stellt ebenso einen Gegenstand der vorliegenden Erfindung dar wie ein Verfahren zum Färben oder Bedrucken von Polyester und/oder halbsynthetischem hydrophobem Celluloseacetet enthaltendem Fasermaterial, insbesondere Textilmaterial aus Cellulose 2¹/₂ -Acetat, Cellulosetriacetat und Polyester, das darin besteht, die erfindungsgemässe Farbstoffmischung auf das genannte Material aufzubringen oder sie in dieses einzuarbeiten. Weitere Substrate, die durch das erfindungsgemässe Verfahren behandelt werden können, sowie bevorzugte Verfahrensbedingungen sind vorstehend bei der näheren Erläuterung der Verwendung der erfindungsgemässen Farbstoffmischungen zu finden. Für die erfindungsgemäss verwendeten Farbstoffmischungen gelten dabei die vorderhand für die Farbstoffe und Farbstoffmischungen angegebenen Definitionen und Bevorzugungen.

Einen weiterer Gegenstand der Erfindung stellt das durch das genannte Verfahren gefärbte bzw. bedruckte Polyester-, halbsynthetische, Celluloseacetat enthaltende hydrophobe Fasermaterial, vorzugsweise Textilmaterial aus Cellulose 2¹/₂ -Acetat, Cellulosetriacetat und Polyester dar.

Die nachfolgenden Beispiele dienen der Veranschaulichung der Erfindung.

### Beispiel 1

Eine Mischung aus den Fabstoffen (1') und (2') bestehend aus 12,5 Teilen des Farbstoffes (1') und 26,25 Teilen des Farbstoffes (2') (der Rest (auf 100 Teile) besteht aus einem handelsüblichen Dispergator auf Ligninsulfonatbasis) wurde verwendet zum Färben von Cellulose 2¹/₂-Acetat in einem Färbebad, welches eine Temperaturverteilung von 90 bis 110°C hatte. Nachdem das Cellulose 2¹/₂-Acetat-Textilstück nach der üblichen reduktiven Reinigungmethode (siehe Bsp 4) gereinigt wurde, konnte eine brilliant blaues Cellulose 2¹/₂-Acetatgewebe erhalten werden, das gute Schweissechtheit und gute Lichechtheiten besass und egal gefärbt war.

### Beispiel 2

Der Versuch wurde wiederholt gemäss Beispiel 1, wobei aber im ganzen Färbebad die Temperatur auf 100°C gehalten wurde. Das Resultat war gleichwertig wie im Beispiel 1.

### Beispiel 3

Cellulose 2¹/₂-Acetatgewebe wurde in einem Färbebad unter den üblichen Bedingungen mit folgender Farbstoffmischung gefärbt: 4,5 Teile vom Farbstoff (1'), 18 Teile vom Fabstoff (2'), 3 Teile vom folgenden Farbstoff: 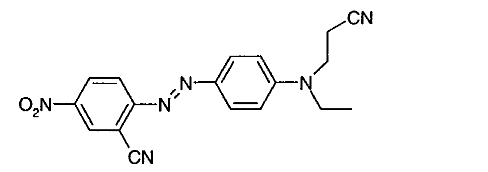 und 22 Teile von folgendem Farbstoff: 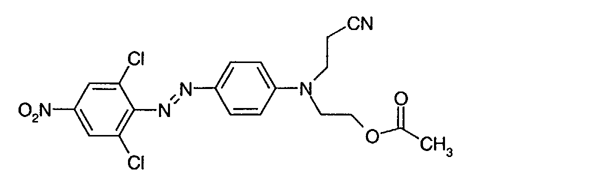 (der Rest (auf 100 Teile) besteht aus einem handelsüblichen Dispergator auf Ligninsulfonatbasis)
Nach der üblichen reduktiven Reinigung (siehe Bsp 4) erhielt man einen tiefschwarz egal gefärbtes Gewebe mit guten Echtheiten

### Beispiel 4

Eine Mischung aus von Farbstoffen gemäss Besispiel 1 wurde verwendet zur Färbung von Polyester nach dem HT Verfahren. Dazu wurdem dem Färbebad von 60°C die üblichen Färbechemikalien zugesetzt und nach 10 Minuten auf bei 130°C aufgeheizt mit einer Aufheizrate von 1,5°C pro Minute. Bei der temperatur wird das Bad während 10 Minuten gehalten. Danach wird das bad abgekühlt und das Textilmaterial kalt und warm gespühlt und reduktiv gereinigt mit einer Mischung aus 3 g/l Hydrosulfit, 2.5 g/l festem NaOH (6 ml/l NaOH 36°Be), 0.5 ml/l Ekaline F Liquid. danach wird wieder kalt und warm gespühlt. Es wurde eine brilliant blaues Polyestergewebe erhalten werden, das gute Schweissechtheit und gute Lichechtheiten besass und egal gefärbt war, erhalten.

## Patentansprüche

1. Farbstoffmischung enthaltend mindestens ein Farbstoff der Formel (1) 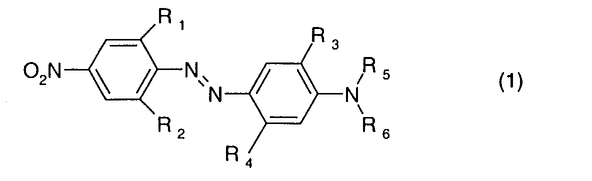 und mindestens ein Farbstoff der Formel (2) 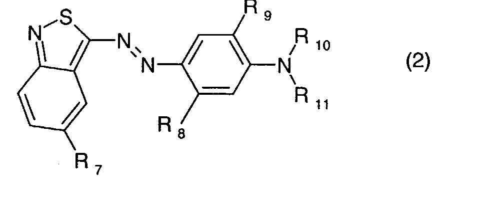 wobei
R₁ Wasserstoff, Halogen, Nitro oder Cyano
R₂ Wasserstoff, Halogen, Nitro oder Cyano
R₃ Wasserstoff, Halogen, C₁-C₄-Alkoxy oder C₁-C₄-Alkyl
R₄ Wasserstoff, C₁-C₄-Alkyl
R₅ Wasserstoff, unsubstituiertes oder durch Hydroxy, Cyano, C₁-C₄-Alkylcarbonyloxy, substituiertes C₁-C₄-Alkyl oder C₁-C₄-Alkenyl
R₆ unsubstituiertes oder durch Hydroxy, Cyano, C₁-C₄-Alkylcarbonyloxy, C₁-C₄-Alkoxycarbonyl substituiertes C₁-C₄-Alkyl oder C₁-C₄-Alkenyl,
R₇ Nitro, C₁-C₄-Alkoxy oder der Rest -SO₂CH₃
R₈ Wasserstoff oder C₁-C₄-Alkyl,
R₉ Wasserstoff oder C₁-C₄-Alkyl,
R₁₀ unsubstituiertes oder durch Hydroxy oder Cyano substituiertes C₁-C₄-Alkyl,
R₁₁ unsubstituiertes oder durch den Rest -O-COR₁₂ substituiertes C₁-C₄-Alkyl, worin
R₁₂ C₁-C₄-Alkyl,
bedeuten.

2. Farbstoffmischungen gemäss Anspruch 1 dadurch charakterisiert, dass sie aus bis zu 60% eines Fabstoffes gemäss der Formel (1) bezogen auf die Summe der Farbstoffe (1) und (2) bestehen.

3. Farbstoffmischung gemäss Anspruch 1 dadurch charakterisiert, dass sie wenigstens einen weiteren der folgenden Fabstoffe enthält: 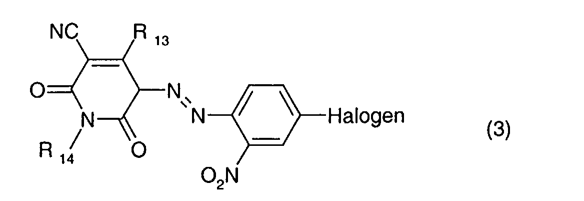 worin
R₁₃ C₁-C₄-Alkyl, R₁₄ C₁-C₄-Alkyl und Halogen die Halogenatome bedeuten, 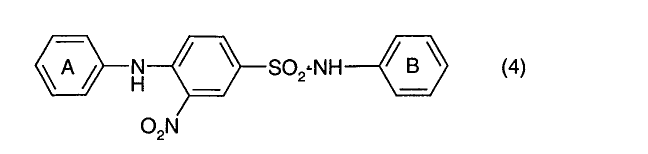 wobei die Ringe A und B weitersubstituiert werden können, 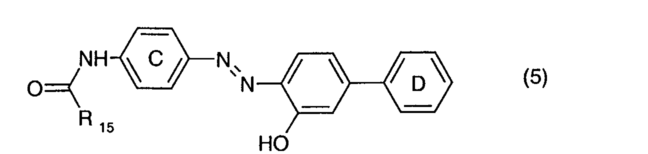 worin
R₁₅ C₁-C₄-Alkyl ist und die Ringe C und D weitersubstituierte werden können, 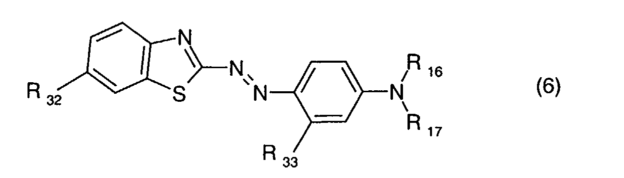 worin
R₁₆ unsubstituiertes oder durch Hydroxy oder Cyano substituiertes C₁-C₄-Alkyl, R₁₇ unsubstituiertes oder durch den Rest -O-COR₁₈ substituiertes C₁-C₄-Alkyl, worin R₁₈ C₁-C₄-Alkyl, R₃₂ Nitro, C₁-C₄-Alkoxy oder der Rest -SO₂CH₃ und R₃₃ Wasserstoff oder C₁-C₄-Alkyl sind, 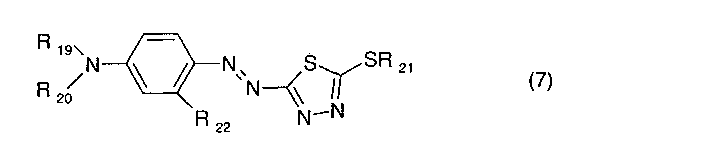 worin
R₁₉ C₁-C₄-Alkyl, R₂₀ C₁-C₄-Alkyl, R₁₅ C₁-C₄-Alkyl und R₂₂ C₁-C₄-Alkyl oder der Rest -NHCOR₂₃ sind, worin R₂₃ C₁-C₄-Alkyl ist, 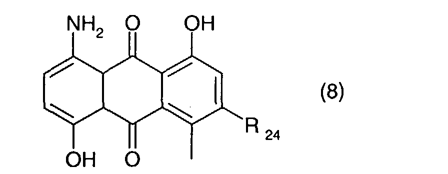 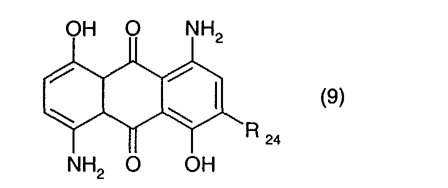 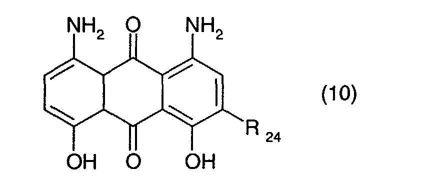 worin R₂₄ Halogen ist, 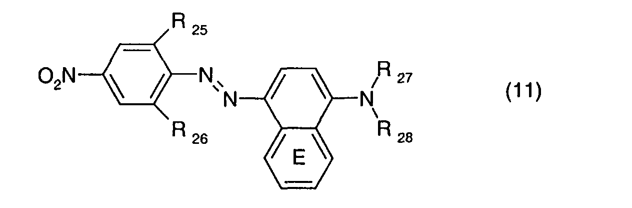 worin
R₂₅ Cyano, Nitro oder Halogen, R₂₆ Halogen, R₂₇ unsubstituiertes oder durch Hydroxy substituiertes C₁-C₄-Alkyl und R₂₈ unsubstituiertes oder durch Hydroxy substituiertes C₁-C₄-Alkyl sind und der Naphthylring E weitersubstituiert werden kann,
und/oder 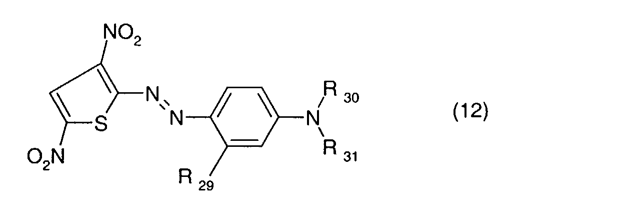 worin
R₂₆ C₁-C₄-Alkyl oder der Rest NHCOR₁₇ sind, worin R₁₇ C₁-C₄-Alkyl ist, R₂₇ C₁-C₄-Alkyl oder C₁-C₄-Alkylcarbonyloxy-C₁-C₄-Alkyl und R₂₈ C₁-C₄-Alkyl oder C₁-C₄-Alkylcarbonyloxy-C₁-C₄- Alkyl sind.

4. Farbstoffmischungen gemäss Anspruch 1 **dadurch gekennzeichnet, dass** der mindestens eine Farbstoff der Formel (1) die Formel (1') und mindestens ein Farbstoff der Formel (2'): 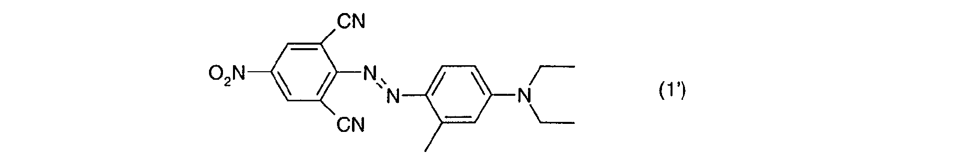 und der mindestens eine Farbstoff der Formel (2) die Formel (2')

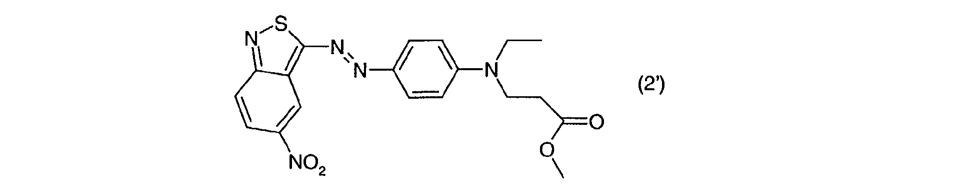

5. Verwendung von Farstoffmischungen gemäss Anspruch 1 zum Färben von halbsynthetischen oder synthetischen hydrophoben Celluloseacetat enthaltenden Fasermaterialien

6. Verwendung von Farstoffmischungen gemäss Anspruch 1 zum Färben von Polyester und/oder Cellulose 2¹/₂-Acetat enthaltenden Fasergebilden.

7. Fasergebilde gefärbt mit einer Farbstoffmischung gemäss Anspruch 1.
